(19) Europäisches Patentamt
European Patent Office
Office européen des brevets

(11) EP 0 958 054 B1

(12) FASCICULE DE BREVET EUROPEEN

(45) Date de publication et mention de la délivrance du brevet:
**28.03.2001 Bulletin 2001/13**

(21) Numéro de dépôt: **98903086.1**

(22) Date de dépôt: **19.01.1998**

(51) Int Cl.[7]: **B01J 37/20**

(86) Numéro de dépôt international:
**PCT/FR98/00092**

(87) Numéro de publication internationale:
**WO 98/31464 (23.07.1998 Gazette 1998/29)**

# (54) PROCEDE POUR LA PRESULFURATION DE CATALYSEURS

VERFAHREN ZUR VORBEHANDLUNG VON KATALYSATOREN MIT SCHWEFEL

METHOD FOR PRE-SULPHURATION OF CATALYSTS

(84) Etats contractants désignés:
**AT BE CH DE DK ES FI FR GB GR IE IT LI LU NL PT SE**

(30) Priorité: **21.01.1997 FR 9700568**

(43) Date de publication de la demande:
**24.11.1999 Bulletin 1999/47**

(73) Titulaire: **ELF AQUITAINE EXPLORATION PRODUCTION FRANCE**
**92400 Courbevoie (FR)**

(72) Inventeur: **ARRETZ, Emmanuel**
**F-64000 Pau (FR)**

(74) Mandataire: **Leboulenger, Jean et al**
**Atofina**
**D.C.R.D./D.P.I.**
**4 Cours Michelet**
**La Défense 10**
**92091 Paris La Défense Cedex (FR)**

(56) Documents cités:
**EP-A- 0 289 211** **US-A- 3 840 474**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne la présulfuration des catalyseurs qui sont principalement utilisés dans le traitement d'hydrocarbures et pour le raffinage du pétrole.

Les opérations industrielles dans lesquelles sont utilisées les catalyseurs concernés par la présente invention consistent tout particulièrement à effectuer un hydrotraitement des charges hydrocarbonées, à température élevée et sous forte pression d'hydrogène, en présence de catalyseurs appropriées, pour convertir les composés organosulfurés par des opérations d'hydrodésulfuration (HDS) avec formation d'hydrogène sulfuré, ainsi que les composés organoazotés par des opérations d'hydrodésazotation (HDN) avec formation d'ammoniac.

Ces catalyseurs sont généralement à base de métaux des groupes VI B et VIII de la classification périodique des éléments, tels que le molybdène, le tungstène, le nickel et le cobalt. Les catalyseurs d'hydrotraitement les plus courants sont formulés à partir des systèmes cobalt-molybdène (Co-Mo), nickel-molybdène (Ni-Mo), nickel-tungstène (Ni-W), sur des supports minéraux poreux tels que des alumines, des silices, des silices-alumines. Ces catalyseurs fabriqués industriellement à des tonnages très importants sont fournis dans leurs formes oxydes (par exemple les catalyseurs oxyde de cobalt-oxyde de molybdène sur alumine symbolisés sous la forme Co-Mo/alumine). Cependant, ces catalyseurs ne sont actifs dans les opérations d'hydrotraitement que sous forme de sulfures métalliques ; par conséquent, avant d'être utilisés ils doivent être présulfurés.

La présulfuration des catalyseurs d'hydrotraitement est une étape importante dans la mise en activité de ces catalyseurs pour obtenir le maximum de leurs performances en HDS et en HDN. Comme l'indiquent les auteurs de Hydrotreating Catalysis (Catalysis, vol. 11, 1996, p. 25, edited by J.R. Anderson and M. Boudart), l'expérience pratique a montré que la procédure de sulfuration peut avoir une influence significative sur l'activité et la stabilité du catalyseur, et beaucoup d'efforts ont été consacrés à améliorer les procédures de sulfuration.

Les procédures classiques de sulfuration consistent à traiter les catalyseurs sous formes oxydes par des composés sulfurés en présence d'hydrogène, dans des conditions de température déterminées. Les composés sulfurés, dans les conditions opératoires utilisées et en présence d'hydrogène, génèrent l'hydrogène sulfuré qui assure la transformation des oxydes métalliques en sulfures. Cette transformation en présence d'hydrogène se traduit pour les métaux concernés des groupes VI B et VIII à passer à un état réduit ; ainsi, par exemple, le molybdène qui sous forme oxyde se trouve à l'état $Mo^{6+}$, est réduit sous forme sulfure à l'état $Mo^{4+}$. Dans le cas des catalyseurs d'hydrotraitement qui contiennent des métaux tels que le molybdène, le tungstène, le nickel, le cobalt, les réactions chimiques qui font intervenir l'hydrogène sulfuré et l'hydrogène pour les transformations réductrices des oxydes métalliques en sulfures peuvent être schématisées de la manière suivante :

$$MoO_3 + H_2 + 2\ H_2S \rightarrow MoS_2 + 3\ H_2O$$

$$WO_3 + H_2 + 2\ H_2S \rightarrow WS_2 + 3\ H_2O$$

$$3\ NiO + H_2 + 2\ H_2S \rightarrow Ni_3S_2 + 3\ H_2O$$

$$9\ CoO + H_2 + 8\ H_2s \rightarrow Co_9S_8 + 9\ H_2O$$

La présulfuration d'un catalyseur par l'hydrogène sulfuré mélangé à de l'hydrogène est la méthode la plus directe et a fait l'objet de plusieurs brevets : US 3 016 347, US 3 140 994, GB 1 309 457, US 3 732 155, US 4 098 682, US 4 132 632, US 4 172 027, US 4 176 087, US 4 334 982, FR 2 476 118. Cette méthode est généralement pratiquée au stade du laboratoire, mais l'utilisation de l'hydrogène sulfuré présente des inconvénients majeurs interdisant sa mise en oeuvre sur tous les sites industriels.

Les procédures industrielles de sulfuration des catalyseurs sont généralement effectuées sous pression d'hydrogène avec des charges liquides contenant des composés soufrés comme agents sulfurants.

La méthode principalement utilisée dans le passé par les raffineurs consistait à présulfurer les catalyseurs avec les charges pétrolières soufrées. Cette technique présentait des inconvénients importants à cause de la difficulté de transformer les composés soufrés en hydrogène sulfuré. Pour éviter la réduction des catalyseurs par l'hydrogène, les présulfurations, démarrées à basse température, devaient être menées lentement pour obtenir une sulfuration complète des catalyseurs à température élevée.

Des additifs soufrés ont été proposés pour améliorer la présulfuration des catalyseurs. La méthode consiste à incorporer un composé sulfuré (spiking agent) à une charge telle qu'un naphta, à une coupe particulière telle qu'un

VGO (vacuum gas oil) ou un LGO (light gas oil). Le brevet US 3 140 994 a été le premier à revendiquer l'emploi de composés liquides à température ambiante de différentes natures : le sulfure de carbone, le thiophène, des mercaptans, des dialkyldisulfures, des diaryldisulfures. Les sulfures organiques, en particulier le diméthylsulfure, ont aussi fait l'objet de revendications. Le diméthyldisulfure (DMDS) a été particulièrement préconisé pour la présulfuration des catalyseurs et le brevet EP 64429 revendique une méthode performante de sulfuration avec le diméthyldisulfure.

H. Hallie (Oil and Gas Journal, Dec. 20, 1982, pp 69 - 74) a fait le point sur ces procédures de sulfuration sous hydrogène qui sont effectuées directement dans les réacteurs d'hydrotraitement. Ces différentes techniques de présulfuration de catalyseurs, dites "in-situ", ont été comparées et les travaux ont montré que la présulfuration avec une charge liquide additionnée d'un agent sulfurant (spiked feedstock) ayant la propriété de se décomposer à basse température est la meilleure technique de sulfuration. La technique sans agent sulfurant additionnel (nonspiked feedstock) donne un catalyseur sulfuré moins actif. L'agent sulfurant additionné à la charge qui est préféré est le diméthyldisulfure.

Des polysulfures organiques ont aussi été revendiqués comme agents sulfurants pour la présulfuration des catalyseurs. Le brevet US 4 725 569 décrit une méthode d'utilisation des polysulfures organiques de type $RS_XR'$ (R et R' pouvant être identiques ou différents et x étant égal ou supérieur à 3) qui consiste à imprégner à température ambiante le catalyseur par une solution contenant le polysulfure, à éliminer ensuite le solvant inerte, et enfin à effectuer la sulfuration sous hydrogène du catalyseur chargé dans le réacteur d'hydrotraitement. Dans le brevet EP 298 111, le polysulfure de type $RS_nR'$ est injecté pendant la présulfuration du catalyseur dilué dans une charge liquide en présence d'hydrogène. L'emploi de mercaptans fonctionnalisés, tels que acides ou esters mercaptocarboxyliques, dithiols, aminomercaptans, hydroxymercaptans, de même que des acides ou esters thiocarboxyliques, est aussi décrit dans le brevet EP 289 211 pour la présulfuration des catalyseurs.

De nouvelles techniques de présulfuration de catalyseurs ont été développées plus récemment. Ces procédures se décomposent en deux étapes. Dans une première étape, dite "ex-situ", le catalyseur est préactivé en l'absence d'hydrogène à l'extérieur de la raffinerie après avoir été imprégné d'un agent sulfurant. La sulfuration complète du catalyseur est effectuée dans le réacteur d'hydrotraitement en présence d'hydrogène. La présulfuration "ex-situ" dispense le raffineur d'injecter un agent sulfurant au cours de la sulfuration du catalyseur sous hydrogène. Les techniques "ex-situ" actuellement développées utilisent comme produits soufrés des polysulfures organiques ou du soufre.

EURECAT a été la première Société à industrialiser une technique de présulfuration de catalyseurs en "ex-situ" basée sur l'utilisation de polysulfures du type $RS_nR'$ (R et R' pouvant être identiques ou différents et $n \geq 3$) qui a fait l'objet du brevet EP 130 850. Ce procédé consiste à imprégner le catalyseur sous forme oxyde par une solution composée de polysulfures organiques, tels que le TPS 37 ou TNPS (tertiononylpolysulfures) commercialisés par ELF ATOCHEM, dilués dans un hydrocarbure du type white-spirit. Cette étape préliminaire d'incorporation au catalyseur d'un composé soufré de nature particulière est complétée par un traitement thermique du catalyseur en l'absence d'hydrogène à des températures ne dépassant pas 150 °C. Cette opération a pour effet d'éliminer le solvant organique et d'assurer la fixation du soufre au catalyseur par l'intermédiaire des polysulfures organiques. A ce stade de présulfuration, le catalyseur est stable à l'air et peut être manipulé sans précaution particulière. Il est fourni dans cet état à l'utilisateur qui peut, après chargement dans le réacteur d'hydrotraitement, achever la sulfuration du catalyseur sous hydrogène pour la transformation totale des métaux en sulfures métalliques.

Des composés organiques polysulfurés de structures différentes ont été aussi revendiqués pour la présulfuration des catalyseurs en "ex-situ". Dans les brevets FR 2 627 104 et EP 329 499, les produits répondent à la formule générale : $R'(S_y-R-S_x-R-S_y)R'$ et sont obtenus à partir d'oléfines et de chlorure de soufre avec une série d'étapes successives qui font intervenir une réaction avec un monohalogénure organique suivie d'une réaction avec un polysulfure alcalin. Dans le brevet EP 338 897, les produits revendiqués sont synthétisés à partir d'oléfines et de chlorure de soufre avec une réaction complémentaire avec un mercaptide alcalin ou un mercaptate polysulfure alcalin.

On a commencé aussi à développer une technique de présulfuration "ex-situ" de catalyseurs en utilisant du soufre en suspension dans une huile (US 4 943 547). L'application industrielle de cette technique a posé de tels problèmes qu'il a fallu mettre au point un nouveau procédé de sulfuration au soufre (demande de brevet WO 93/02793) qui consiste à mettre le catalyseur en contact avec du soufre et une oléfine de point d'ébullition élevé. Le catalyseur ainsi imprégné est ensuite traité thermiquement à une température supérieure à 150°C ; la sulfuration du catalyseur est achevée sous hydrogène à des températures supérieures à 200°C.

La présente invention concerne la présulfuration des catalyseurs. Elle a pour but d'apporter des améliorations dans la présulfuration des catalyseurs et d'accroître l'activité des catalyseurs, en particulier pour l'hydrotraitement des charges hydrocarbonées.

Ce but est atteint en utilisant un mercaptan tertiaire dans la présulfuration des catalyseurs, ce mercaptan pouvant être employé seul ou en mélange avec des composés soufrés de différentes natures, habituellement utilisés pour sulfurer les catalyseurs.

La présente invention a donc pour principal objet un procédé de présulfuration de catalyseurs à base d'oxydes métalliques, caractérisé en ce que l'agent sulfurant est constitué par ou comprend au moins un mercaptan tertiaire.

La présente invention s'applique aux différentes techniques de présulfuration de catalyseurs qui sont utilisées en "in-situ" et en "ex-situ".

Dans les présulfurations "in-situ", les composés soufrés sont introduits pendant le traitement des catalyseurs en présence d'hydrogène pour la transformation des oxydes métalliques en sulfures métalliques. Selon la présente invention, les mercaptans tertiaires peuvent être incorporés aux catalyseurs avant leur traitement par des composés sulfurés en présence d'hydrogène, ou peuvent être introduits en même temps que l'addition des composés soufrés qui sont généralement utilisés pour générer, en présence d'hydrogène, l'hydrogène sulfuré qui assure la transformation des oxydes métalliques en sulfures métalliques. L'utilisation de mercaptans tertiaires selon la présente invention a pour effet d'accroître l'activité des catalyseurs. Elle permet, de plus, de diminuer les durées des présulfurations "in-situ". Il a en effet été observé dans le cadre de la présente invention que les mercaptans tertiaires libèrent l'hydrogène sulfuré à des températures beaucoup plus basses que tous les autres composés soufrés utilisés pour la présulfuration "in-situ" et dans des conditions endothermiques qui permettent d'accélérer les étapes de la sulfuration des catalyseurs en opérant avec des montées en températures plus rapides et avec des paliers de températures plus courts. Par exemple, en opérant avec du tertiododécylmercaptan, la formation d'hydrogène sulfuré commence dès 100°C avec des catalyseurs habituels d'hydrotraitement (Co-Mo, Ni-Mo, Ni-W, sur alumines). Avec des supports tels que des zéolithes, la formation d'hydrogène sulfuré peut se produire au-dessous de 100°C.

Dans les présulfurations "ex-situ", les composés soufrés sont incorporés aux catalyseurs avant leur traitement pour la transformation des oxydes métalliques en sulfures métalliques. Selon la présente invention, les mercaptans tertiaires sont généralement incorporés aux catalyseurs, soit seuls, soit en mélanges avec des composés sulfurés de différentes natures, mais ils peuvent aussi être introduits, soit avant l'incorporation des composés sulfurés, soit après l'incorporation des composés sulfurés. L'utilisation de mercaptans tertiaires selon la présente invention a pour effet d'accroître l'activité des catalyseurs. Elle permet, de plus, d'améliorer la présulfuration "ex-situ" des catalyseurs en libérant l'hydrogène sulfuré à basse température dans des conditions endothermiques telles que la présulfuration s'effectue sans exothermicité. Ainsi, avec des catalyseurs habituels d'hydrotraitement (Co-Mo, Ni-Mo, Ni-W, sur alumines), la formation d'hydrogène sulfuré commence dès 100°C accompagnée de la transformation des oxydes métalliques. Avec des supports tels que zéolithes, la formation d'hydrogène sulfuré peut se produire au dessous de 100°C.

Les mercaptans tertiaires relatifs à la présente invention répondent à la formule générale :

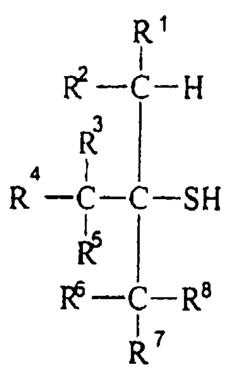

dans laquelle les symboles $R^1$, $R^2$, $R^3$, $R^4$, $R^5$, $R^6$, $R^7$ et $R^8$, identiques ou différents, représentent chacun un atome d'hydrogène ou un radical alkyle, linéaire ou ramifié, aryle, alkylaryle ou aralkyle, ces radicaux pouvant contenir un ou plusieurs hétéroatomes tels que l'oxygène et/ou le soufre.

Les mercaptans préférés de l'invention sont des mercaptans tertiaires de formule brute $C_nH_{2n+1}$-SH contenant de 4 à 16 atomes de carbone. De tels mercaptans sont fabriqués industriellement à partir d'hydrogène sulfuré et d'oléfines par des procédés catalytiques tels que ceux décrits notamment dans les brevets US 4 102 931, EP 101 356 et EP 329 521. On fabrique ainsi le tertiobutylmercaptan (TBM)à partir de l'isobutène, le tertiononylmercaptan (TNM) à partir du tripropylène et le tertiododécylmercaptan (TDM) à partir du tétrapropylène ou du triisobutylène.

La proportion de mercaptan tertiaire qui peut être utilisé en mélange avec des composés soufrés de différentes natures est de 1 % à 99 % du poids de soufre total nécessaire à la présulfuration du catalyseur. Ce soufre apporté par le mercaptan tertiaire a un effet particulièrement sensible à partir de 10 % en poids du soufre total nécessaire à la présulfuration du catalyseur.

***1. Cas de la présulfuration "in-situ"***

Dans la présulfuration "in-situ", l'agent de sulfuration est introduit, progressivement, en continu pendant l'opération de sulfuration du catalyseur qui est effectuée sous courant d'hydrogène. Les composés soufrés qui sont utilisés comme agents de sulfuration sont de natures différentes : sulfure de carbone, mercaptans légers (éthylmercaptan, n-butylmercaptan), diméthylsulfure, diméthyldisulfure, et éventuellement des polysulfures comme le ditertiononylpolysulfure ou encore le ditertiobutyl-polysulfure ; peuvent aussi être utilisés des polysulfures obtenus à partir de soufre et d'oléfines.

L'incorporation d'un mercaptan tertiaire selon la présente invention pour la présulfuration des catalyseurs peut être effectuée avant ou pendant l'introduction des agents de sulfuration habituellement utilisés.

Dans le cas où le mercaptan tertiaire est incorporé préalablement aux agents de sulfuration habituels, cette opération peut être réalisée soit avant le chargement du catalyseur dans le réacteur de présulfuration, soit directement dans le réacteur de présulfuration.

Dans le cas où le mercaptan tertiaire est incorporé pendant l'introduction des agents de sulfuration habituels, l'injection complémentaire de mercaptan tertiaire peut être effectuée soit de manière continue, soit dans la première partie de l'opération de sulfuration du catalyseur, soit suivant des cycles d'injection déterminés.

***2. Cas de la présulfuration "ex-situ"***

Les agents de sulfuration utilisés en présulfuration "ex-situ" doivent être non volatils et avoir des points d'ébullition suffisamment élevés pour rester fixés dans la porosité des catalyseurs pendant les opérations d'imprégnation et ensuite d'activation thermique avant d'être chargés dans les réacteurs d'hydrotraitement.

Des composés soufrés de type polysulfures organiques sont particulièrement bien adaptés, du fait de leurs propriétés physico-chimiques. Certains sulfoxydes comme le diméthylsulfoxyde, le méthyléthylsulfoxyde, le diéthylsulfoxyde, les sulfones correspondantes et le sulfolane peuvent aussi être utilisés pour la présulfuration "ex-situ". Dans le cas où le soufre est le composé soufré incorporé directement au catalyseur, les oléfines mises en oeuvre avec le soufre sont des oléfines à point d'ébullition élevé.

Le mercaptan tertiaire qui est incorporé aux catalyseurs avec ces différents composés soufrés, éventuellement sous forme de mélanges, doit avoir un point d'ébullition suffisamment élevé pour ne pas être entraîné au cours des différentes opérations qu'ont à subir les catalyseurs à des températures pouvant atteindre et éventuellement dépasser 150°C ; il doit donc avoir une température d'ébullition supérieure à 150°C, et de préférence supérieure à 180°C.

Les mercaptans tertiaires préférés sont notamment le tertiononylmercaptan ($Eb_{760}$ = 189-210°C) et le tertiododécylmercaptan ($Eb_{760}$ = 228-246°C).

Les polysulfures relatifs à la présente invention sont d'une manière générale des composés qui contiennent au moins 2 atomes de soufre et qui sont obtenus par les voies connues et décrites de synthèse de ces différents types de composés.

Des polysulfures peuvent être obtenus par réaction d'un mercaptan (RSH) avec du soufre en présence d'un catalyseur basique. Ces polysulfures ont comme formule générale : $R\text{-}S_n\text{-}R$ (avec $n \geq 2$). La réaction de formation peut être ainsi schématisée :

$$2\,RSH + (n-1)\,S \rightarrow R\text{-}S_n\text{-}R + H_2S$$

2

Le mercaptan RSH est constitué, soit d'un radical hydrocarboné tel que méthyle, éthyle, un radical hydrocarboné linéaire ou ramifié contenant de 3 à 20 atomes de carbone, un radical hydrocarboné pouvant contenir un ou plusieurs atomes d'oxygène sous forme de fonctions hydroxyles, éthers, acides ou esters carboxyliques, ou encore un ou plusieurs atomes de soufre sous forme de fonctions sulfures.

En opérant avec deux mercaptans différents (RSH et R'SH) on peut obtenir des polysulfures dissymétriques de type $R\text{-}S_n\text{-}R'$. Toutefois, le produit final est constitué d'un mélange de polysulfures symétriques et dissymétriques.

Des polysulfures de structure $R\text{-}S_n\text{-}R$ avec des groupements R hydrocarbonés tels que les atomes de carbone directement liés au soufre sont des atomes de carbone tertiaires peuvent être obtenus à partir d'oléfines comme l'isobutène et le diisobutylène par réaction directe avec l'hydrogène sulfuré et le soufre.

Des polysulfures de compositions et de structures différentes peuvent être obtenus par réaction du soufre avec des oléfines, avec ou sans catalyseur. Des oléfines hydrocarbonées linéaires (telles que les $\alpha$-oléfines) ou ramifiées, des acides et esters insaturés d'origines végétales, réagissent avec le soufre à des températures supérieures à 150°C pour donner des composés polysulfurés de structures plus complexes que les polysulfures de type $R\text{-}S_n\text{-}R$, associant plusieurs molécules d'oléfines avec le soufre. De nombreux brevets décrivent les modes de préparation de ces oléfines sulfurisées et les différents catalyseurs qui peuvent être utilisés.

D'autres voies d'accès à des composés polysulfurés à partir d'oléfines ont été mises en oeuvre en utilisant du chlorure de soufre comme réactif primaire. Les produits sulfochlorés obtenus sont ensuite traités par des sulfures

ou des polysulfures alcalins, des mercaptides ou des mercaptates polysulfures alcalins pour augmenter les teneurs en soufre et éliminer le chlore. L'inconvénient de ces types de composés polysulfurés est la présence de taux de chlore résiduel.

La présente invention sera mieux comprise à l'aide de la partie expérimentale qui suit à titre illustratif. Les exemples présentés ont pour but de montrer les gains d'activité catalytique qui peuvent être obtenus dans une réaction-test d'hydrotraitement, l'hydrodésulfuration (HDS) du thiophène, avec un catalyseur industriel Co-Mo/alumine qui a été soumis à des présulfurations de différents types en "in-situ" et en "ex-situ", dans des conditions propres à la présente invention.

## PARTIE EXPERIMENTALE

### *Caractéristiques du catalyseur Co-Mo/alumine*

Ce catalyseur, référencé Ketjenfine 742-1.3 Q et fabriqué par la Société AKZO NOBEL, est fourni sous forme d'oxyde de cobalt et d'oxyde de molybdène supportés sur une alumine. Il présente les caractéristiques suivantes :

| | |
|---|---|
| $MoO_3$ | 15,0 % en poids |
| CoO | 4,4 % en poids |
| Surface spécifique | 264 $m^2/g$ |
| Volume poreux | 0,55 ml/g |

### I. TEST DE REFERENCE DU CATALYSEUR Co-Mo/ALUMINE PRESULFURE A L'HYDROGENE SULFURE

Il s'agit d'un test de laboratoire qui permet de déterminer l'activité d'un catalyseur présulfuré à l'hydrogène sulfuré pour l'hydrodésulfuration (HDS) du thiophène, par la mesure de la vitesse de transformation du thiophène en hydrocarbures en $C_4$.

La réaction d'HDS est effectuée à pression atmosphérique de même que la présulfuration préalable "in-situ" du catalyseur par de l'hydrogène sulfuré dilué dans l'hydrogène.

#### *I.1 Appareillage*

Le réacteur tubulaire en verre comprend une chambre réactionnelle d'un diamètre de 10 mm avec un verre fritté soudé à sa partie inférieure sur lequel est déposé le catalyseur broyé et tamisé à une granulométrie comprise entre 0,2 et 0,5 mm. Une gaine thermométrique en verre permet par l'intermédiaire d'un thermocouple le contrôle de la température au niveau du catalyseur.

Le réacteur est placé verticalement dans un four électrique régulé par un programmateur-régulateur de température avec action PID (Programmation Intégrale et Différentielle).

Le réacteur est relié à sa partie inférieure (entrée des réactifs) à un système d'alimentation des gaz à partir d'une bouteille d'hydrogène sulfuré et d'une bouteille d'hydrogène ; ce système est constitué de vannes de distribution et de régulateurs de débit Brooks incluant une ligne d'alimentation d'argon pour la mise de l'installation sous atmosphère inerte. Ce dispositif permet de réaliser le mélange $H_2S$-$H_2$ pour la présulfuration du catalyseur. De plus, un saturateur thermostaté contenant du thiophéne liquide placé en dérivation de l'alimentation de l'hydrogène sert à injecter le thiophène par entraînement par l'hydrogène. La pression partielle du thiophène peut être variée en changeant la température du saturateur. Les lignes en aval du saturateur sont chauffées à l'aide d'un cordon chauffant à 60°C pour éviter les condensations du thiophène. Le flux $H_2$-thiophène sortant du saturateur est mélangé avec l'$H_2S$ avant d'être introduit dans le réacteur catalytique.

Le réacteur est relié à sa partie supérieure (sortie des effluents) à un chromatographe en phase gazeuse en ligne par l'intermédiaire d'une vanne thermostatée d'injection de gaz à 6 voies, dont la sortie est branchée à un débitmètre volumétrique pour la mesure du débit de l'effluent gazeux qui sort du réacteur et qui traverse en continu la vanne d'injection. Le chromatographe est équipé d'une colonne d'une longueur de 3 mètres (remplie d'un support imprégné par 20 % en masse de phase stationnaire OV1, gomme 100 % méthylée) et d'un catharomètre à thermistance (Gow-Mac) dont le signal est intégré par un intégrateur-calculateur.

#### *I.2 Présulfuration du catalyseur par $H_2S$-$H_2$*

La charge de catalyseur pour le test de référence est de 25 mg. Elle a été obtenue par tamisage (0,2-0,5 mm) d'un échantillon du catalyseur Co-Mo/alumine KF742-1.3 Q séché et broyé. La sulfuration du catalyseur oxyde est

effectuée sous un flux gazeux de 1,8 l/h d'un mélange d'$H_2S$ (15 % en volume) et d'hydrogène, avec une montée progressive en température de 3°C/min depuis la température ambiante jusqu'à 400°C. La température est maintenue à 400°C pendant 2 heures avec le même flux gazeux.

*I.3* Test *d'hydrodésulfuration du thiophène*

Pour la réaction d'hydrogénolyse du thiophène, effectuée aussi à pression atmosphérique à la suite de la présulfuration du catalyseur, le protocole opératoire est le suivant.
La température du réacteur est maintenue à 400°C, tandis que le mélange $H_2S$-$H_2$ est modifié de façon que la teneur en $H_2S$ soit réduite à 2 % en volume, avec un débit gazeux $H_2S+H_2$ réglé à 5,4 l/h. Avant le mélange avec l'$H_2S$, l'hydrogène est envoyé au saturateur contenant le thiophène liquide thermostaté à une température telle que la pression partielle du thiophène dans le gaz entrant dans le réacteur soit de 60 torr (8 kPa).
Ces conditions de réaction sont adaptées pour mesurer la conversion du thiophène en régime dynamique dans des conditions différentielles pour obtenir de faibles taux de transformation du thiophène.
Les effluents gazeux sortant du réacteur sont analysés au moyen du chromatographe pour déterminer le thiophène non converti et les hydrocarbures en $C_4$ formés.
La réaction est suivie pendant 3 heures avec des analyses périodiques des effluents gazeux.

*I.4 Evaluation de l'activité du catalyseur en HDS du thiophène*

Le taux de conversion du thiophène est calculé à partir des analyses chromatographiques des effluents de réaction.
L'évaluation de l'activité du catalyseur pour la réaction-test d'hydrodésulfuration est déterminée par la vitesse de disparition du thiophène dans ces conditions.
Pour le catalyseur Co-Molalumine KF 742-1.3 Q, présulfuré à l'hydrogène sulfuré (dilué dans l'hydrogène), on obtient avec ce test de référence une vitesse de disparition du thiophène mesurée expérimentalement en m.mole par heure et par gramme de catalyseur pesé après le test. Cette vitesse peut être exprimée dans la pratique en kg de thiophène transformé par heure et par kg de catalyseur.
La valeur obtenue pour le catalyseur Co-Mo/alumine KF 742-1.3 Q, exprimée en vitesse de transformation, est de 4,48 kg de thiophène converti par heure et par kg de catalyseur.
Pour faciliter les comparaisons des résultats d'activité catalytique des différents tests qui ont été effectués pour mettre en évidence les gains de vitesse de conversion du thiophène obtenus dans le cadre de la présente invention, on a affecté à ce test de référence une activité relative exprimée en RWA (Relative Weight Activity) de valeur :

$$RWA = 100$$

**II. TESTS DU CATALYSEUR Co-MolALUMINE PRETRAITE PAR DES MERCAPTANS ET PRESULFURE A L'HYDROGENE SULFURE**

Cette série de tests a pour but de déterminer les gains d'activité en HDS du thiophène qui peuvent être obtenus lorsque le catalyseur Co-Molalumine Ketjefine 742-1.3 Q a été prétraité avec un mercaptan tertiaire, le tertiododécylmercaptan (TDM), puis présulfuré à l'$H_2S$. Les échantillons de catalyseurs prétraités avec différentes teneurs de TDM sont soumis à une présulfuration complète à l'hydrogène sulfuré en présence d'hydrogène avant d'être évalués dans la réaction-test d'hydrodésulfuration du thiophène selon les protocoles décrits précédemment (partie I).
Des tests identiques ont été effectués avec un mercaptan primaire, le n-octylmercaptan (NOM).
Ces essais comparatifs mettent en évidence qu'un mercaptan à structure primaire tel que le n-octylmercaptan, $CH_3$ $(CH_2)_7SH$, n'a pas l'effet promoteur significatif d'un mercaptan tertiaire tel que le tertiododécylmercaptan. Pour confirmer ce résultat, un test complémentaire, réalisé dans les mêmes conditions, a été effectué avec le n-dodécylmercaptan (NDM).
Le tertiododécylmercaptan utilisé est fabriqué à partir d'un oligomère du propylène, le tétrapropylène.

*II.1 Tests du catalyseur Co-Mo/alumine prétraité au tertiododécylmercaptan et présulfuré à l'hydrogène sulfuré*

II.1.1 PRETRAITEMENT DU CATALYSEUR PAR LE TDM

Le TDM est incorporé au catalyseur à température ambiante par imprégnation dans les pores du catalyseur. Compte tenu du volume poreux du catalyseur, le TDM est dilué dans un solvant facile à éliminer. Après cette étape

d'imprégnation, le solvant est évaporé sous vide. Le catalyseur imprégné de TDM est ensuite chauffé à 135°C sous un courant d'azote. Ce prétraitement a pour but de fixer au catalyseur par l'intermédiaire du TDM une partie du soufre nécessaire à sa présulfuration.

*II.1.1.1 IMPREGNATION DE TDM AU CATALYSEUR*

Le solvant retenu est l'isooctane ($Eb_{760}$ = 99 °C).
Le TDM, de masse moléculaire moyenne de 202 g/mole, a une teneur pondérale de 15,8 % en soufre.
Dans le but d'étudier l'effet de la teneur en soufre incorporé au catalyseur sous forme de TDM, trois échantillons du catalyseur KF 742-1.3 Q ont été imprégnés dans les conditions suivantes :

- Un premier échantillon de 30 g de catalyseur a été imprégné par 18 ml d'une solution à 19 % en poids de TDM dans l'isooctane (solution à 3 % en poids de soufre). Après un contact de 2 heures, l'isooctane a été éliminé du catalyseur par évaporation sous vide au rotavapor à 50°C sous une pression réduite de 20 torr (2,67 kPa).. Le catalyseur imprégné de TDM a été conservé en atmosphère d'azote.
- Un deuxième échantillon de 30 g de catalyseur a été imprégné par 18 ml d'une solution à 57 % en poids de TDM dans l'isooctane (solution à 9 % en poids de soufre). Après un contact de 2 heures, l'isooctane a été éliminé du catalyseur par évaporation sous vide au rotavapor à 50°C sous une pression réduite de 20 torr (2,67 kPa). Le catalyseur imprégné de TDM a été conservé en atmosphère d'azote.
- Un troisième échantillon de 30g de catalyseur a été imprégné par 18 ml de TDM (15,8 % en poids de soufre), puis conservé en atmosphère d'azote.

*II.1.1.2 ACTIVATION THERMIQUE DES CATALYSEURS IMPREGNES DE TDM*

L'appareillage se compose d'un réacteur tubulaire en verre à double enveloppe avec un verre fritté soudé à sa partie inférieure (sur lequel est déposé l'échantillon de catalyseur à traiter) et d'une gaine centrale en verre équipée d'un thermocouple pour la mesure de la température du catalyseur. Le réacteur, dont la double enveloppe est traversée par une huile circulant au moyen d'une boucle externe depuis un thermostat, est relié à sa partie supérieure à une alimentation d'azote, et à sa partie inférieure à un récepteur refroidi pour la récupération des composés qui sont formés pendant l'activation thermique et qui sont entraînés par le courant d'azote.
Les activations thermiques ont été effectuées dans les conditions suivantes : l'échantillon de catalyseur (10 g) déposé dans le réacteur est chauffé en atmosphère d'azote jusqu'à 120°C par l'intermédiaire du thermostat, et est maintenu à cette température sous flux d'azote de 1,5 l/h pendant 90 min puis chauffé à 135°C et traversé par le même débit d'azote pendant 2 heures. Après refroidissement du catalyseur en atmosphère d'azote, l'échantillon est conservé en atmosphère d'azote.

II.1.2 PRESULFURATION PAR $H_2S$-$H_2$ DES CATALYSEURS PRETRAITES AU TDM

Les échantillons de catalyseur Co-Mo/alumine KF742-1.3 Q qui ont été prétraités au TDM ont, après avoir été broyés et tamisés à 0,2-0,5 mm sous argon, été soumis à une sulfuration complète par un mélange $H_2S$-$H_2$ ($H_2S$ : 15 % en volume) dans les mêmes conditions que pour les tests de référence dont le protocole opératoire et l'appareillage ont été précédemment décrits (partie I).
Les charges de catalyseur utilisées pour la présulfuration ont été adaptées pour obtenir les mêmes taux de transformation du thiophène dans les tests d'activité HDS que dans le cas du test de référence (protocole opératoire décrit dans le test de référence).

II.1.3 TESTS D'ACTIVITE EN HDS DU THIOPHENE DES CATALYSEURS PRETRAITES AU TDM ET SULFURES PAR $H_2S$-$H_2$

Après leur sulfuration par $H_2S$-$H_2$, les trois échantillons de catalyseur KF 742-1.3 Q qui ont été préalablement prétraités par du TDM ont été soumis au même test HDS du thiophène que pour le test de référence.
Les résultats obtenus pour chacun des trois échantillons de catalyseur (N°1 ; N°2 ; N°3) sont présentés dans le tableau ci-dessous sous forme de vitesses de conversion du thiophène, exprimées en kg/heure de thiophène transformé par kg de catalyseur.
Ces valeurs sont traduites en activités relatives massiques (RWA) sur la base d'une RWA = 100 attribuée au test de référence pour l'échantillon de catalyseur référence (partie I).

| Echantillon catalyseur | Prétraitement | Sulfuration | HDS du thiophène | |
|---|---|---|---|---|
| | TDM (solution : % S) | $H_2S$ | Vitesse kg/h.kg.cata | RWA |
| Référence | Non | Oui | 4,48 | 100 |
| N° 1 | 3 | Oui | 4,56 | 101,8 |
| N° 2 | 9 | Oui | 5,59 | 124,7 |
| N° 3 | 15 | Oui | 6,19 | 138,1 |

*II. 2 Tests du catalyseur Co-Mo/alumine prétraité par des mercaptans primaires et présulfuré à l'hydrogène sulfuré*

Avec le n-octylmercaptan (NOM), on a effectué trois imprégnations différentes de ce mercaptan (comme pour le TDM) au catalyseur KF 742-1.3 Q à partir de solutions de NOM dans l'isooctane à 3 % de soufre, à 9 % de soufre, et à 15 % de soufre, dans les mêmes conditions que dans le cas précédent du TDM.

Avec le n-dodécylmercaptan (NDM), on a effectué une imprégnation de ce mercaptan au catalyseur KF 742-1.3 Q à partir d'une solution de NDM dans l'isooctane à 9 % de soufre.

Ces échantillons de catalyseur différemment imprégnés ont ensuite été activés thermiquement suivant le même protocole que dans le cas précédent du TDM, et ils ont été soumis à la présulfuration par $H_2S$-$H_2$.

Les tests d'activité en HDS du thiophène réalisés sur ces échantillons de catalyseur initialement prétraités par les mercaptans primaires NOM et NDM ont donné les résultats présentés dans le tableau ci-dessous, exprimés en vitesses de conversion du thiophène (kg/heure et par kg de catalyseur) et traduits en activités relatives massiques (RWA) sur la base d'une RWA = 100 attribuée au test de référence pour l'échantillon de catalyseur référence (partie I).

| Echantillon catalyseur | Prétraitement | Sulfuration | HDS du thiophène | |
|---|---|---|---|---|
| | Mercaptan primaire (solution : % S) | $H_2S$ | Vitesse kg/h.kg.cata | RWA |
| Référence | Non | Oui | 4,48 | 100 |
| N° 4 | NOM (3 % S) | Oui | 4,18 | 93,3 |
| N° 5 | NOM (9 % S) | Oui | 4,80 | 107,2 |
| N° 6 | NOM (15 % S) | Oui | 4,76 | 106,4 |
| N° 7 | NDM (9 % S) | Oui | 4,93 | 110,2 |

Ces résultats confirment que l'utilisation d'un mercaptan tertiaire, comme le tertiododécylmercaptan, dans la présulfuration par l'hydrogène sulfuré (dilué dans l'hydrogène) d'un catalyseur commercial Co-Mo/alumine, dans le cas présent le KF 742-1.3 Q, a un effet promoteur important sur l'activité du catalyseur en HDS du thiophène. Avec des mercaptans primaires les gains d'activité catalytique sont faibles.

**III. TEST DU CATALYSEUR Co-Mo/ALUMINE PRESULFURE AU DIMETHYLDISULFURE**

La présulfuration au diméthyldisulfure (DMDS) du catalyseur Co-Mo/alumine Ketjenfine 742-1.3 Q est effectuée selon une procédure classique "in-situ" avec une charge liquide contenant le DMDS et sous pression d'hydrogène.

Après sa récupération sous atmosphère inerte, le catalyseur sulfuré contient dans sa porosité une quantité importante de charge liquide qui a servi à sa sulfuration, et dans cet état il ne peut pas être directement utilisé pour le test HDS du thiophène qui a été mis en oeuvre pour la mesure des activités catalytiques des catalyseurs. Le catalyseur

doit subir un traitement de séchage qui consiste en une extraction par un solvant léger suivie d'un conditionnement à chaud sous flux d'argon.

Le catalyseur est ensuite broyé et tamisé à 0,2-0,5 mm sous argon pour être testé selon le protocole établi pour le test de référence (partie I), pour la mesure de son activité catalytique dans des conditions identiques.

*III. 1 Présulfuration du catalyseur Co-Mo/alumine par DMDS-$H_2$*

III.1.1 APPAREILLAGE

L'appareil de présulfuration consiste en un réacteur tubulaire en acier inoxydable logé au centre d'un four électrique cylindrique avec 3 zones de chauffe indépendantes pilotées par des régulateurs de température et un programmateur de température. L'extrémité supérieure du réacteur est connectée aux lignes d'arrivée de gaz (hydrogène ou azote) dont les débits sont contrôlés et régulés par un débitmètre thermique et d'arrivée de la charge liquide qui est stockée dans un réservoir à pression atmosphérique et dont l'injection est effectuée au moyen d'une pompe à débit contrôlé. L'extrémité inférieure du réacteur est reliée à une vanne pneumatique de pression dont la sortie est connectée à un récepteur pour la récupération des effluents liquides à pression atmosphérique et dont la sortie est reliée à une ligne d'évacuation des effluents gazeux vers une torche.

Le réacteur tubulaire d'une longueur de 72 cm et d'un diamètre de 24 mm possède une gaine thermométrique centrale d'un diamètre de 6 mm munie d'un thermocouple mobile permettant la mesure de la température de long du lit catalytique.

III.1.2 CONDITIONS DE PRESULFURATION DU CATALYSEUR

Une charge de 40 ml (28g) de catalyseur est traitée à 150°C pendant 8 heures sous courant d'azote à pression atmosphérique. Puis le réacteur est mis en pression à 15 bars d'hydrogène, et à la température de 150°C on injecte la charge liquide constituée de n-hexadécane additionné de diméthyldisulfure (préparation sur la base de 2 g de DMDS pour 100 g d'hexadécane) avec un débit de 150 ml et l'hydrogène avec un débit de 30 l/h mesuré à pression atmosphérique, tandis que le catalyseur est soumis à un programme de température qui consiste en une première montée de 20°C/h effectuée jusqu'à 220°C avec un palier de une heure à 220°C, puis d'une deuxième montée à 30°C/h jusqu'à 300°C suivie d'un palier final de 2 heures à 300°C. Toute l'opération de présulfuration est effectuée à la pression de 15 bars.

Après refroidissement du réacteur sous courant d'azote, le catalyseur est récupéré en atmosphère d'argon pour un traitement par solvant.

III.1.3 SECHAGE DU CATALYSEUR SULFURE

A sa sortie du réacteur, le catalyseur est encore imprégné d'hexadécane. Il est traité sous argon au soxhlet par de l'isooctane au reflux. Après 5 heures d'extraction, les contrôles analytiques montrent que l'échantillon de catalyseur ne contient plus d'hexadécane.

L'élimination du solvant est effectuée par traitement du catalyseur dans un réacteur tubulaire en verre à double enveloppe par chauffage à 120°C sous courant d'argon pendant 3 heures. Le catalyseur ainsi séché est alors prêt pour être testé.

*III.2 Test d'activité en HDS du thiophène du catalyseur Co-Mo/alumine présulfuré au DMDS*

Le catalyseur présulfuré au DMDS a été soumis au protocole opératoire du test de référence (partie I) pour la mesure d'activité HDS :

- broyage et tamisage à 0,2-0,5 mm sous argon ;
- chargement dans le réacteur expérimental du catalyseur tamisé en quantité appropriée pour obtenir un même taux de transformation du thiophène que dans le cas du test de référence (sulfuration à l'$H_2S$ du catalyseur Co-Molalumine KF 742-13 Q) ;
- traitement du catalyseur par le mélange $H_2S$-$H_2$ à 15 % de $H_2S$ selon le protocole du test de référence (partie I) ;
- test HDS du thiophène selon le protocole du test de référence (partie I)

Le test donne une vitesse de disparition du thiophène de 5,88 kg/h et par kg de catalyseur, ce qui correspond à une valeur d'activité relative massique : RWA = 131,3 (sur la base d'une RWA = 100 attribuée au test de référence).

## IV. TESTS DU CATALYSEUR Co-Mo/ALUMINE PRETRAITE PAR DU TERTIODODECYLMERCAPTAN ET PRESULFURE AU DMDS

Cette série de tests a pour but de déterminer les gains d'activités en HDS du thiophène qu'on peut obtenir avec le catalyseur Co-Mo/alumine KF 742-1.3 Q lorsque ce dernier a été prétraité par le tertiododécylmercaptan (TDM) et ensuite présulfuré au DMDS comme dans l'essai précédent.

*IV.1 Prétraitement du catalyseur Co-Mo/alumine par le TDM*

Deux échantillons du catalyseur Co-Mo/alumine KF 742-1.3 Q ont été prétraités au TDM dans des conditions identiques à celles qui ont été utilisées dans la partie II.

Le premier échantillon (30 g) a été imprégné par 18 ml de solution à 3 % de soufre (solution à 19 % en poids de TDM dans l'isooctane). Le deuxième échantillon (30 g) a été imprégné par 18 ml de solution à 9 % de soufre (solution à 57 % en poids de TDM dans l'isooctane). Après imprégnation et élimination du solvant isooctane, les deux échantillons ont été traités thermiquement selon la procédure décrite dans la partie II, puis conservés en atmosphère d'azote.

*IV.2 Présulfuration au DMDS des catalyseurs prétraités au TDM*

Les deux échantillons du catalyseur Co-Mo/alumine KF 742-1.3 Q prétraités au TDM ont été soumis à une sulfuration complète au DMDS dans l'appareillage décrit précédemment avec la même charge d'hexadécane additionné de DMDS et sous pression d'hydrogène.

L'échantillon de catalyseur (40 ml) est chargé sous atmosphère d'azote dans le réacteur qui est ensuite chauffé rapidement à 100°C. A cette température le réacteur est mis en pression à 15 bars d'hydrogène. On injecte la charge liquide (2 g de DMDS pour 100 g de n-hexadécane) avec un débit de 150 ml/h et l'hydrogène avec un débit de 30 l/h mesuré à pression atmosphérique. Après un premier palier de une heure à 100°C, une première montée en température à 25°C/h est effectuée jusqu'à 150°C avec un palier de une heure à 150°C, puis une deuxième montée en température à 20°C/h jusqu'à 220°C et un palier de une heure à 220°C, enfin une montée en température à 30°C/h jusqu'à 300°C suivie d'un palier final de 2 heures à 300°C. Toute l'opération de sulfuration au DMDS est effectuée à la pression de 15 bars.

Les deux échantillons récupérés après sulfuration ont été traités sous argon au soxhlet par de l'isooctane au reflux et séchés ensuite à 120°C sous courant d'argon.

*IV.3 Tests d'activité en HDS du thiophène des catalyseurs prétraités au TDM et présulfurés au DMDS*

Après sulfuration au DMDS, les deux échantillons préalablement prétraités au TDM ont été soumis au protocole opératoire du test de référence (partiel) pour la mesure d'activité HDS :

- broyages et tamisages à 0,2-0,5 mm sous argon ;
- chargement dans le réacteur expérimental d'une quantité de catalyseur déterminée pour obtenir le même taux de transformation du thiophène que dans le cas du test de référence (sulfuration à l'$H_2S$ du catalyseur Co-Mo/alumine KF 742-1.3 Q) ;
- traitement des catalyseurs par le mélange $H_2S$-$H_2$ à 15 % de $H_2S$ selon le protocole du test de référence (partie I) ;
- test HDS du thiophène selon le protocole du test de référence (partie I).

Les résultats obtenus dans les tests d'activité HDS pour chacun des deux échantillons de catalyseur (N°8 et N°9 ) sont présentés dans le tableau ci-dessous sous forme de vitesses de conversion du thiophène exprimées en kg/heure de thiophène transformé par kg de catalyseur. Ces valeurs sont traduites en activités relatives massiques (RWA) sur la base d'une RWA = 100 attribuée au test de référence (partie I).

Pour l'échantillon référence (DMDS), il s'agit de l'échantillon de catalyseur présulfuré au DMDS (partie III).

| | Prétraitement | Sulfuration | HDS du thiophène | |
|---|---|---|---|---|
| Echantillon catalyseur | TDM (solution : % S) | DMDS | Vitesse kg/h.kg.cata | RWA |
| Référence (DMDS) | Non | Oui | 5,88 | 131,3 |
| N° 8 | 3 | Oui | 6,36 | 142,1 |
| N° 9 | 9 | Oui | 6,72 | 150,1 |

### V. TESTS DU CATALYSEUR Co-Mo/ALUMINE PRESULFURE AU DMDS ET AU TERTIODODECYLMERCAPTAN

Cette série de tests a pour but de déterminer les gains d'activités en HDS du thiophène qu'on peut obtenir avec le catalyseur Co-Mo/alumine KF 742-1.3 Q, lorsqu'il a été présulfuré "in-situ" par des mélanges de DMDS et de tertiododécylmercaptan ou par le tertiododécylmercaptan seul.

*V.1 Présulfurations "in-situ" du catalyseur Co-Mo/alumine*

- Charges de catalyseur : 40 ml (28 g) de Co-Mo/alumine KF 742-1.3 Q
- Charges de présulfuration : Les différentes charges de présulfuration utilisées pour ces essais contiennent la même teneur en soufre que la charge de référence au DMDS-hexadécane, soit 1,33 % en poids de soufre.

  Essai n°10 : Charge contenant un mélange de DMDS (75 % du soufre) et de TDM (25 % du soufre) dans l'hexadécane.
  Essai n°11 : Charge contenant un mélange de DMDS (50 % du soufre) et de TDM (50 % du soufre) dans l'hexadécane.
  Essai n°12 : Charge contenant uniquement du TDM dilué dans l'hexadécane.

- Conditions de présulfuration : Après son chargement dans le réacteur de présulfuration "in-situ" décrit précédemment, le catalyseur est séché à 130°C sous courant d'azote pendant 16 heures, à pression atmosphérique. Le réacteur est ensuite mis en pression à 15 bars d'hydrogène, et à la température de 130°C on injecte l'hydrogène avec un débit de 30 l/h mesuré à pression atmosphérique ainsi que la charge liquide avec un débit de 300 ml/h pendant la première demi-heure, puis avec un débit de 150 ml/h. Après un premier palier de une heure à 130°C, une première montée en température à 45°C/h est effectuée jusqu'à 220°C avec un palier de une heure à 220°C, puis une montée en température à 40°C/h jusqu'à 300°C est suivie d'un palier final de 2 heures à 300°C. Ces opérations de sulfuration sont effectuées à la pression de 15 bars.

Les trois échantillons récupérés après leurs sulfurations respectives ont été traités sous argon au sohxlet par de l'isooctane au reflux et séchés ensuite à 120°C sous courant d'argon.

*V.2 Tests d'activités en HDS du thiophéne des catalyseurs présulfurés*

Après leur sulfuration "in-situ", les trois échantillons (N°10 ; N°11 ; N°12) ont été soumis au protocole opératoire du test de référence (partie I) pour la mesure d'activité HDS :

- broyages et tamisages à 0,2-0,5 mm sous argon ;
- chargement dans le réacteur expérimental d'une quantité de catalyseur déterminée pour obtenir un même taux de transformation du thiophène que dans le cas du test de référence (sulfuration à l'$H_2S$ du catalyseur Co-Mo/alumine KF 742-1.3 Q) ;
- traitement des catalyseurs par le mélange $H_2S$-$H_2$ à 15 % de $H_2S$ selon le protocole du test de référence (partie I) ;
- test HDS du thiophéne selon le protocole du test de référence (partie I).

Les résultats obtenus dans les tests d'activité HDS pour chacun des trois échantillons de catalyseur (N°10 ;

N°11 ; N°12) sont présentés dans le tableau ci-dessous sous forme de vitesses de conversion du thiophéne exprimées en kg/heure de thiophène transformé par kg de catalyseur. Ces valeurs sont traduites en activités relatives massiques (RWA) sur la base d'une RWA = 100 attribuée au test de référence (partie I).

Pour l'échantillon référence (DMDS) il s'agit de l'échantillon de catalyseur présulfuré au DMDS (partie III).

| | Présulfuration "in-situ" | | HDS du thiophène | |
|---|---|---|---|---|
| Echantillon catalyseur | DMDS (% du S) | TDM (% du S) | Vitesse kg/h.kg.cata | RWA |
| Référence (DMDS) | 100 | 0 | 5,88 | 131,3 |
| N° 10 | 75 | 25 | 6,32 | 141,0 |
| N° 11 | 50 | 50 | 6,20 | 138,3 |
| N° 12 | 0 | 100 | 6,52 | 145,6 |

## VI. TESTS DU CATALYSEUR Co-Mo/ALUMINE PRESULFURE "EX-SITU" PAR DES POLYSULFURES $RS_nR$

Ces essais ont pour but de tester le catalyseur Co-Mo/alumine KF 742-1.3 Q présulfuré par des polysulfures de type $RS_nR$ selon la technique dite "ex-situ" qui consiste à imprégner le catalyseur avec ces polysulfures et de l'activer thermiquement en atmosphère inerte, puis de terminer sa sulfuration sous hydrogène.

L'étape de présulfuration "ex-situ" a été effectuée selon le protocole qui a été mis en oeuvre dans la partie II : imprégnation du catalyseur par une solution de polysulfure suivie de l'élimination du solvant et activation thermique dans un réacteur tubulaire en atmosphère d'azote.

La sulfuration finale sous hydrogène et enfin le test HDS du thiophène ont été réalisés comme précédemment suivant le protocole opératoire du test de référence avec son appareillage (description dans la partie I).

### *VI.1 Présulfuration "ex-situ" du catalyseur Co-Molalumine par des polysulfures RSnR*

Pour ces essais, on a utilisé les polysulfures suivants :

- le di-tertiododécylpentasulfure de formule générale :
  $C_{12}H_{25}$-$S_5$-$C_{12}H_{25}$ (commercialisé par ELF ATOCHEM sous le nom TPS 32) ;
- le di-tertiononylpentasulfure de formule générale $C_9H_{19}$-$S_5$-$C_9H_{19}$ (commercialisé par ELF ATOCHEM sous le nom TPS 37 ou TNPS) ;
- le di-n-octylpolysulfure, synthétisé au laboratoire à partir de n-octylmercaptan et de soufre par un procédé décrit dans le brevet EP 337 837 ; ce polysulfure de formule générale :
  n-$C_5H_{17}$-$S_n$-n-$C_8H_{17}$ est dénommé NOPS.

L'analyse de ces polysulfures donne :

| Produit | Nom | Teneur en soufre S (% poids) |
|---|---|---|
| Di-tertiododécylpentasulfure | TPS 32 | 31,3 |
| Di-tertiononylpentasulfure | TPS 37 | 36,7 |
| Di-n-octylpolysulfure | NOPS | 39,4 |

### VI.1.1 IMPREGNATION DES POLYSULFURES $RS_nR$ AU CATALYSEUR

L'incorporation au catalyseur de la quantité de soufre nécessaire à sa sulfuration, au départ sous forme de polysulfure, est réalisée par l'imprégnation de solutions de polysulfures dans un solvant.

Conditions d'imprégnation retenues :

* Solutions à 20 % en poids de soufre constituées des quantités adéquates de polysulfures diluées dans l'isooctane.

* Compte tenu du volume poreux du catalyseur KF 742-1.3 Q, évalué à 0,55 ml par gramme de catalyseur, le volume de solution d'imprégnation est de 18 ml pour 30 g de catalyseur.

Par exemple, dans le cas du NOPS, une solution de 100 g est préparée à partir de 51 g de ce polysulfure et de 49 g d'isooctane.

Chaque échantillon de 30 g de catalyseur placé dans une fiole en verre à fond plat est mis en contact avec 18 ml de solution correspondante de polysulfure. Après un contact de 2 heures à la température ambiante, l'isooctane est éliminé du catalyseur par évaporation sous vide au rotavapor à 50°C sous une pression réduite de 20 torr (2,67 kPa). Le catalyseur est conservé en atmosphère d'azote.

VI.1.2. ACTIVATION THERMIQUE DES CATALYSEURS IMPREGNES DE POLYSULFURES

L'opération est effectuée dans le même appareillage et dans les mêmes conditions que ce qui est décrit dans la partie II.1.1.2.

Chaque échantillon (10g) est chauffé en atmosphère d'azote jusqu'à 120°C et est maintenu à cette température sous courant d'azote de 1,5 l/h pendant 90 min, puis chauffé à 135°C avec le même débit d'azote pendant 2 heures.

Après refroidissement du catalyseur, l'échantillon est conservé en atmosphère d'azote.

*VI.2 Test d'activité en HDS du thiophéne des catalyseurs présulfurés "exsitu" par les polysulfures*

Après activation thermique sous azote des 3 échantillons présulfurés "ex-situ" respectivement par le TPS 32, le TPS 37 et le NOPS, on a procédé aux tests HDS selon le protocole opératoire du test de référence (partie I), qui est appliqué pour chaque mesure d'activité catalytique effectuée dans les mêmes conditions :

- broyage et tamisage à 0,2- 0,5 mm sous argon ;
- chargement d'une quantité de catalyseur déterminée pour obtenir un même taux de transformation du thiophène que dans le cas du test de référence ;
- sulfuration finale du catalyseur sous hydrogène en mélange avec 15 % de $H_2S$ selon le protocole du test de référence (partie I) ;
- test HDS du thiophène selon le protocole du test de référence (partie I).

  Les résultats obtenus dans les tests d'activité HDS pour chacun des trois échantillons de catalyseur (N°13 ; N°14 ; N°15) sont présentés dans le tableau ci-dessous sous forme de vitesses de conversion du thiophène exprimées en kg/heure de thiophène transformé par kg de catalyseur.

Ces valeurs sont traduites en activités relatives massiques (RWA) sur la base d'une RWA = 100 attribuée au test de référence (partie I).

| | Présulfuration "ex-situ" | HDS du thiophène | |
|---|---|---|---|
| Echantillon catalyseur | Polysulfures $RS_nR$ (solution à 20 % S) | Vitesse kg/h.kg.cata | RWA |
| N° 13 | TPS 32 | 4,93 | 110,2 |
| N° 14 | TPS 37 | 4,56 | 101,9 |
| N° 15 | NOPS | 4,85 | 108,3 |

**VII. TESTS DU CATALYSEUR CO-MO/ALUMINE PRESULFURE "EX SITU" PAR DES MELANGES DE POLYSULFURES $RS_nR$ ET DE TERTIODODECYLMERCAPTAN**

Des essais comparatifs ont été effectués avec présulfuration "ex-situ" par des mélanges polysulfures-tertiododécylmercaptan pour mettre en évidence l'effet obtenu en associant un mercaptan tertiaire, tel que le TDM, à des polysulfures $RS_nR$ sur l'amélioration de l'activité du catalyseur de référence, le Co-Mo/alumine KF 742-1.3 Q, dans le test HDS du thiophène.

On a utilisé les mêmes protocoles opératoires que dans les essais précédents de présulfuration "ex-situ" par

des polysulfures R-$S_n$-R (partie VI).

*VII.1 Présulfuration "ex-situ" du catalyseur Co-Mo/alumine par des mélanges de polysulfures et de tertiododécylmercaptan*

Comme polysulfures on a utilisé le di-tertiododécylpentasulfure (TPS 32) et le di-n-octylpolysulfure (NOPS)

VII.1.1 IMPREGNATION DU MELANGE POLYSULFURE + TERTIODODECYLMERCAPTAN AU CATALYSEUR

Pour l'imprégnation, on a préparé des solutions à 20 % en poids de soufre à partir de deux mélanges de polysulfure et de TDM :

<u>1er mélange:</u>

- Polysulfure : 75 % en poids du soufre total dans la solution
- TDM : 25 % en poids du soufre total dans la solution
  Le complément à 100 est fait par de l'isooctane.

<u>2ème mélange :</u>

- Polysulfure : 41 % en poids du soufre total dans la solution
- TDM : 59 % en poids du soufre total dans la solution

Par exemple, dans le cas où le polysulfure est le NOPS, une solution de 100 g à 20 % de soufre dans laquelle le NOPS représente 75 % du soufre et le TDM représente 25 % du soufre est constituée de :

| | |
|---|---|
| NOPS | 38,1 g |
| TDM | 31,6 g |
| Isooctane | 30,3g |
| Total | 100 g |

Les imprégnations ont été effectuées dans les mêmes conditions :
mise en contact de 30 g de catalyseur KF 742-1.3 Q avec 18 ml de solution d'imprégnation, puis, après contact de 2 heures à la température ambiante, élimination du solvant (isooctane) par évaporation sous vide au rotavapor à 50°C sous une pression réduite de 20 torr (2,67 kPa).
Les échantillons de catalyseur ont été conservés en atmosphère d'azote.

VII.1.2 ACTIVATION THERMIQUE DES CATALYSEURS IMPREGNES PAR UN MELANGE POLYSULFURE + TERTIODODECYLMERCAPTAN

Les activations thermiques ont été effectuées de manière identique selon le protocole utilisé dans les essais précédents.
Chaque échantillon (10 g) a été chauffé en atmosphère d'azote jusqu'à 120°C et maintenu à cette température sous courant d'azote de 1,5 l/h pendant 90 min, puis chauffé à 135°C avec le même débit d'azote pendant 2 heures. Après refroidissement du catalyseur, l'échantillon a été conservé en atmosphère d'azote.

*VII.2 Tests d'activité en HDS du thiophéne des catalyseurs présulfurés "ex situ" par des mélanges de polysulfure et de tertiododécylmercaptan*

Les échantillons de catalyseur activés thermiquement ont été soumis à des tests HDS selon le protocole opératoire établi pour le test de référence (partie 1) et appliqué à tous les catalyseurs pour la mesure de leur activité catalytique :

- broyage et tamisage à 0,2-0,5 mm sous argon ;
- chargement d'une quantité de catalyseur déterminée pour obtenir le même taux de transformation du thiophène que dans le cas du test de référence:
- sulfuration finale du catalyseur sous hydrogène en mélange avec 15 % de $H_2S$, selon le protocole du test de

référence (partie I) ;

- test HDS du thiophène selon le protocole du test de référence (partie I).

Les résultats obtenus dans les tests d'activité HDS pour les différents échantillons de catalyseur sont présentés dans les tableaux suivants sous forme de vitesses de conversion du thiophène exprimées en kg/heure de thiophéne transformé par kg de catalyseur.
Ces valeurs sont traduites en activités relatives massiques (RWA) sur la base d'une RWA = 100 attribuée au test de référence (partie I).

| Echantillon catalyseur | Présulfuration "ex-situ" Mélange (solution à 20 % S) | | HDS du thiophène | |
|---|---|---|---|---|
| | TPS 32 | TDM | Vitesse kg/h.kg.cata | RWA |
| Référence (N° 13) | 100 (% du S) | - | 4,93 | 110,2 |
| N° 16 | 75 (% du S) | 25 (% du S) | 5,08 | 113,4 |
| N° 17 | 41 (% du S) | 59 (% du S) | 5,96 | 133,0 |

| Echantillon catalyseur | Présulfuration "ex-situ" Mélange (solution à 20 % S) | | HDS du thiophène | |
|---|---|---|---|---|
| | NOPS | TDM | Vitesse kg/h.kg.cata | RWA |
| Référence (N°15) | (100 (% du S) | - | 4,85 | 108,3 |
| N° 18 | 75 (% du S) | 25 (% du S) | 5,16 | 115,2 |
| N° 19 | 41 (% du S) | 59 (% du S) | 5,77 | 128,9 |

**VIII. TESTS DU CATALYSEUR Co-Mo/ALUMINE PRESULFURE "EX SITU" PAR UNE OLEFINE SOUFREE ET DU TERTIODODECYLMERCAPTAN**

Ces essais montrent que des oléfines soufrées obtenues à partir de soufre et de composés oléfiniques peuvent être utilisées comme agents de présulfuration "ex-situ" dans les mêmes conditions que les polysulfures de type R-$S_n$-R qui sont revendiqués dans l'art antérieur et utilisés industriellement pour la présulfuration "ex-situ", et que l'association d'un mercaptan tertiaire comme le TDM aux oléfines soufrées a pour effet d'améliorer l'activité du catalyseur de référence Co-Mo/alumine KF 742-1.3 Q dans le test HDS du thiophène.
L'oléfine soufrée utilisée comme agent de présulfuration "ex-situ" dans cet exemple illustratif a été obtenue par réaction thermique du soufre avec du tétrapropylène.
Des essais comparatifs ont été effectués avec des mélanges de cette oléfine soufrée et de tertiododécylmercaptan comme agents de présulfuration "ex-situ".
On a utilisé le même protocole opératoire que dans les essais précédents de présulfuration "ex-situ" par des polysulfures R-$S_n$-R (partie VI) et par des mélanges de polysulfures R-$S_n$-R et de tertiododécylmercaptan (partie VII).

*VIII.1 Obtention de l'oléfine soufrée à partir de soufre et de tétrapropylène*

Dans un réacteur en verre à double enveloppe à travers laquelle circule une huile chauffée par un thermostat, équipé d'un agitateur mécanique, d'une sonde thermométrique et d'un réfrigérant, on introduit sous atmosphère d'azote 60 g de soufre solide finement broyé et 300 g de tétrapropylène (une coupe oligomère du propylène de formule moyenne $C_{12}H_{24}$). Le mélange réactionnel est chauffé sous agitation jusqu'à 170 °C et est maintenu à cette température pendant 4 heures. Après refroidissement le produit de réaction homogène (pas de dépôt de soufre solide) est soumis à une distillation sous une pression réduite de 20 torr (2,67 kPa) dans un rotavapor chauffé par un bain d'huile à 100-105°C. On récupère 82,5 g de distillat qui correspond, par l'analyse chromatographique, à du tétrapropylène.
Le produit brut, de couleur brune, recueilli dans le bouilleur est l'oléfine soufrée qui contient environ 23 % en

poids de soufre.

*VIII.2 Présulfuration "ex-situ" du catalyseur Co-Mo/alumine par l'oléfine soufrée et par des mélanges d'oléfine soufrée et de tertiododécylmercaptan*

VIII.2.1 IMPREGNATION DU CATALYSEUR CO-MO/ALUMINE

Imprégnation de l'oléfine soufrée

Solution d'imprégnation à 20 % en poids de soufre avec l'isooctane comme solvant.

Imprégnations de mélanges oléfine soufrée + tertiododécylmercaptan

* 1er mélange : solution à 20 % en poids de soufre
  Oléfine soufrée : 75 % en poids du soufre total dans la solution
  TDM : 25 % en poids du soufre total dans la solution
  Le complément à 100 est fait avec l'isooctane.
* 2ème mélange : solution à 19 % en poids de soufre Oléfine soufrée : 52 % en poids du soufre total dans la solution
  TDM : 48 % en poids du soufre total dans la solution

Les imprégnations ont été effectuées dans les mêmes conditions: mise en contact de 30g de catalyseur Co-Mo/alumine KF 742-1.3 Q avec 18 ml de solution d'imprégnation, puis, après contact de 2 heures à la température ambiante, élimination du solvant par évaporation sous vide au rotavapor à 50°C sous une pression réduite de 20 torr (2,67 kPa). Les échantillons de catalyseur ont été conservés en atmosphère d'azote.

VIII.2.2 ACTIVATION THERMIQUE DES CATALYSEURS IMPREGNES

Les activations thermiques ont été effectuées de manière identique selon le protocole utilisé dans les essais précédents.

Chaque échantillon (10g) a été chauffé en atmosphère d'azote jusqu'à 120°C et maintenu à cette température sous courant d'azote de 1,5 l/h pendant 90 min, puis chauffé à 135°C avec le même débit d'azote pendant 2 heures. Après refroidissement du catalyseur, l'échantillon a été conservé en atmosphère d'azote.

*VIII.3 Tests d'activité en HDS du thiophène des catalyseurs présulfurés "ex-situ" par l'oléfine soufrée et par des mélanges d'oléfine soufrée et de tertiododécylmercaptan*

Les échantillons de catalyseur activés thermiquement ont été soumis à des tests HDS selon le protocole opératoire établi pour le test de référence (partiel) I) et appliqué à tous les catalyseurs pour la mesure de leur activité catalytique :

- broyage et tamisage à 0,2-0,5 mm sous argon
- chargement d'une quantité de catalyseur déterminée pour obtenir le même taux de transformation du thiophène que dans le cas du test de référence
- sulfuration finale du catalyseur sous hydrogène en mélange avec 15 % de $H_2S$, selon le protocole du test de référence (partie I)
- test HDS du thiophène selon le protocole du test de référence (partie I).

Les résultats obtenus dans les tests d'activité HDS pour les différents échantillons de catalyseur sont présentés dans le tableau suivant sous forme de vitesses de conversion du thiophène exprimées en kg/heure de thiophène transformé par kg de catalyseur. Ces valeurs sont traduites en activités relatives massiques (RWA) sur la base d'une RWA= 100 attribuée au test de référence (partie I).

| | Présulfuration "ex-situ" | | HDS du thiophène | |
|---|---|---|---|---|
| Echantillon catalyseur | Oléfine soufrée | TDM | Vitesse kg/h.kg.cata | RWA |
| N° 20 | 100 | - | 4,67 | 104,3 |
| N° 21 | 75 (% du S) | 25 (% du S) | 4,98 | 111,3 |
| N° 22 | 52 (% du S) | 48 (% du S) | 5,47 | 122,2 |

**Revendications**

1. Procédé de présulfuration de catalyseurs à base d'oxydes métalliques, caractérisé en ce que l'agent sulfurant est constitué par ou comprend au moins un mercaptan tertiaire de formule générale :

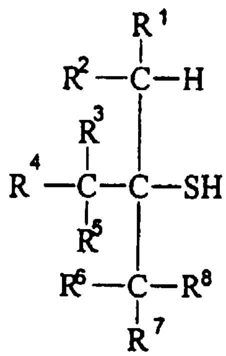

dans laquelle les symboles $R^1$, $R^2$, $R^3$, $R^4$, $R^5$, $R^6$, $R^7$ et $R^8$, identiques ou différents, représentent chacun un atome d'hydrogène, un radical alkyle, linéaire ou ramifié, ou un radical aryle, alkylaryle ou aralkyle, ces radicaux pouvant contenir un ou plusieurs hétéroatomes.

2. Procédé selon la revendication 1 dans lequel le mercaptan tertiaire contient de 4 à 16 atomes de carbone et répond à la formule brute $C_nH_{2n+1}$-SH.

3. Procédé selon la revendication 2 dans lequel le mercaptan tertiaire est le tertiobutylmercaptan, le tertiononylmercaptan, ou le tertiododécylmercaptan.

4. Procédé selon l'une des revendications 1 à 3 dans lequel le(s) mercaptan(s) tertiaire(s) est (sont) associé(s) à au moins un autre composé donneur de soufre.

5. Procédé selon la revendication 4 dans lequel le composé donneur de soufre, autre que le(s) mercaptan(s) tertiaire (s), est choisi parmi l'hydrogène sulfuré, le sulfure de carbone, les mercaptans primaires ou secondaires, les sulfures et polysulfures organiques, le thiophène et ses dérivés, les sulfoxydes, les sulfones et le sulfolane.

6. Procédé selon la revendication 4 ou 5 dans lequel la proportion de mercaptan(s) tertiaire(s) correspond à au moins 1 %, de préférence au moins 10 %, du poids de soufre total nécessaire à la présulfuration du catalyseur.

7. Procédé selon l'une des revendications 1 à 6 dans lequel la présulfuration est conduite de manière "in situ".

8. Procédé selon la revendication 7 dans lequel le(s) mercaptan(s) tertiaire(s) est (sont) associé(s) à au moins un autre composé donneur de soufre choisi parmi le sulfure de carbone, les mercaptans légers, le diméthylsulfure, le diméthyldisulfure, les di-tertiononylpolysulfures, les di-tertiobutylpolysulfures et les polysulfures obtenus à partir de soufre et d'oléfines.

**9.** Procédé selon l'une des revendications 1 à 6 dans lequel la présulfuration est conduite de manière "ex-situ".

**10.** Procédé selon la revendication 9 dans lequel le(s) mercaptan(s) tertiaire(s) et éventuellement le(s) autre(s) composé(s) donneur(s) de soufre ont des points d'ébullition supérieurs à150°C, de préférence supérieurs à 180°C.

**11.** Procédé selon la revendication 9 ou 10 dans lequel le mercaptan tertiaire est le tertiononylmercaptan ou le tertiododécylmercaptan, seul ou associé à un polysulfure organique obtenu par réaction du soufre avec au moins un mercaptan ou avec au moins une oléfine.

**12.** Procédé selon la revendication 11 dans lequel le mercaptan tertiaire est associé à un polysulfure de formule $R-S_n-R$ avec $n \geq 2$ et R désigne un radical hydrocarboné contenant de 1 à 20 atomes de carbone, ou à une oléfine soufrée.

**13.** Procédé selon l'une des revendications 1 à 12 dans lequel le catalyseur est un catalyseur à base d'au moins un métal des groupes VIB et VIII de la classification périodique des éléments, de préférence le molybdène, le tungstène, le nickel et/ou le cobalt.

**14.** Procédé selon la revendication 13 dans lequel le catalyseur est une association Co-Mo, Ni-Mo ou Ni-W, déposée sur un support minéral poreux.

**15.** Procédé selon la revendication 14 dans lequel le catalyseur est un catalyseur Co-Mo/Alumine.

**16.** Utilisation d'un catalyseur présulfuré selon l'une des revendications 1 à 15 pour l'hydrotraitement de charges hydrocarbonées.

## Claims

**1.** Process for the presulphurization of catalysts based on metal oxides, characterized in that the sulphurizing agent consists of or includes at least one tertiary mercaptan of general formula:

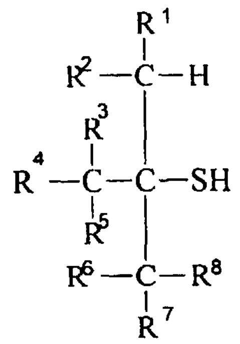

in which each of the symbols $R^1$, $R^2$, $R^3$, $R^4$, $R^5$, $R^6$, $R^7$ and $R^8$, which are identical or different, denotes a hydrogen atom, a linear or branched alkyl radical, or an aryl, alkylaryl or aralkyl radical, it being possible for these radicals to contain one or more heteroatoms.

**2.** Process according to Claim 1 in which the tertiary mercaptan contains from 4 to 16 carbon atoms and corresponds to the empirical formula $C_nH_{2n+1}-SH$.

**3.** Process according to Claim 2 in which the tertiary mercaptan is tert-butyl mercaptan, tert-nonyl mercaptan or tert-dodecyl mercaptan.

**4.** Process according to one of Claims 1 to 3 in which the tertiary mercaptan(s) is(are) associated with at least one other sulphur-donor compound.

5. Process according to Claim 4 in which the sulphur-donor compound other than the tertiary mercaptan(s) is chosen from hydrogen sulphide, carbon disulphide, primary or secondary mercaptans, organic sulphides and polysulphides, thiophene and its derivatives, sulphoxides, sulphones and sulpholane.

6. Process according to Claim 4 or 5 in which the proportion of tertiary mercaptan(s) corresponds to at least 1 %, preferably to at least 10 %, of the weight of total sulphur necessary for the presulphurization of the catalyst.

7. Process according to one of Claims 1 to 6 in which the presulphurization is conducted in an in-situ manner.

8. Process according to Claim 7 in which the tertiary mercaptan(s) is(are) associated with at least one other sulphur-donor compound chosen from carbon disulphide, the light mercaptans, dimethyl sulphide, dimethyl disulphide, di-tert-nonyl polysulphides, di-tert-butyl polysulphides and the polysulphides obtained from sulphur and olefins.

9. Process according to one of Claims 1 to 6 in which the presulphurization is conducted in an ex-situ manner.

10. Process according to Claim 9, in which the tertiary mercaptan(s) and optionally the other sulphur-donor compound (s) have boiling points higher than 150°C, preferably higher than 180°C.

11. Process according to Claim 9 or 10 in which the tertiary mercaptan is tert-nonyl mercaptan or tert-dodecyl mercaptan, alone or associated with an organic polysulphide obtained by reaction of sulphur with at least one mercaptan or with at least one olefin.

12. Process according to Claim 11 in which the tertiary mercaptan is associated with a polysulphide of formula $R-S_n-R$ with $n \geq 2$ and R denotes a hydrocarbon radical containing from 1 to 20 carbon atoms, or with a sulphur-containing olefin.

13. Process according to one of Claims 1 to 12 in which the catalyst is a catalyst based on at least one metal of groups VI B and VIII of the Periodic Classification of the elements, preferably molybdenum, tungsten, nickel and/or cobalt.

14. Process according to Claim 13 in which the catalyst is a Co-Mo, Ni-Mo or Ni-W association deposited on a porous inorganic support.

15. Process according to Claim 14 in which the catalyst is a Co-Mo/alumina catalyst.

16. Use of a presulphurized catalyst according to one of Claims 1 to 15 for the hydrotreating of hydrocarbon feedstocks.

## Patentansprüche

1. Verfahren zur Vorsulfurierung von Katalysatoren auf Grundlage von Metalloxiden, dadurch gekennzeichnet, daß das sulfurierende Mittel aus mindestens einem tertiären Mercaptan besteht oder mindestens eines enthält, das die folgende allgemeine Formel hat:

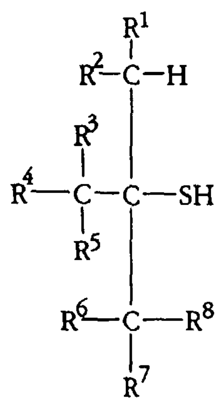

in der die gleichen oder verschiedenen Symbole $R^1$, $R^2$, $R^3$, $R^4$, $R^5$, $R^6$, $R^7$ und $R^8$ ein jedes ein Wasserstoffatom, einen linearen oder verzweigten Alkylrest oder einen Aryl-, Alkylaryl- oder Aralkylrest bedeutet, wobei diese Reste ein oder mehrere Heteroatome enthalten können.

**2.** Verfahren nach Anspruch 1, in dem das tertiäre Mercaptan 4 bis 16 Kohlenstoffatome enthält und der allgemeinen Formel $C_nH_{2n+1}$-SH entspricht.

**3.** Verfahren nach Anspruch 2, in dem das tertiäre Mercaptan tert.-Butylmercaptan, tert.-Nonylmercaptan oder tert.-Dodecylmercaptan ist.

**4.** Verfahren nach einem der Ansprüche 1 bis 3, in dem das/die tertiäre(n) Mercaptan(e) an mindestens eine andere schwefelabgebende Verbindung gebunden ist/sind.

**5.** Verfahren nach Anspruch 4, in dem die schwefelabgebende Verbindung, ausgenommen das/die tertiäre(n) Mercaptan(e), aus Schwefelwasserstoff, Schwefelkohlenstoff, den primären oder sekundären Mercaptanen, den organischen Sulfiden und Polysulfiden, Thiophen und seinen Derivaten, den Sulfoxiden, den Sulfonen und Sulfolan gewählt ist/sind.

**6.** Verfahren nach Anspruch 4 oder 5, in dem der Anteil des/der tertiären Mercaptans/e mindestens 1%, vorzugsweise mindestens 10 %, des Gewichts des gesamten für die Vorsulfurierung des Katalysators notwendigen Schwefels beträgt.

**7.** Verfahren nach einem der Ansprüche 1 bis 6, in dem die Vorsulfurierung nach "in situ"-Art durchgeführt wird.

**8.** Verfahren nach Anspruch 7, in dem das/die tertiäre(n) Mercaptan(e) an mindestens eine andere schwefelabgebende Verbindung gebunden ist/sind, die aus Schwefelkohlenstoff, den leichten Mercaptanen, Dimethylsulfid, Dimethyldisulfid, den Di-tert.-nonylpolysulfiden, den Di-tert.-butylpolysulfiden und den aus Schwefel und Olefinen erhaltenen Polysulfiden gewählt ist.

**9.** Verfahren nach einem der Ansprüche 1 bis 6, in dem die Vorsulfurierung "ex-situ" durchgeführt wird.

**10.** Verfahren nach Anspruch 9, in dem das/die tertiäre(n) Mercaptan(e) und gegebenenfalls die andere(n) schwefelabgebende(n) Verbindung(en) Siedepunkte über 150 °C, vorzugsweise über 180 °C, hat/haben.

**11.** Verfahren nach Anspruch 9 oder 10, in dem das tertiäre Mercaptan tert.-Nonylmercaptan oder tert.-Dodecylmercaptan allein oder an ein organisches Polysulfid gebunden ist, das durch Reaktion von Schwefel mit mindestens einem Mercaptan oder mindestens einem Olefin erhalten wurde.

**12.** Verfahren nach Anspruch 11, in dem das tertiäre Mercaptan an ein Polysulfid der Formel $R-S_n-R$ mit $n \geq 2$, in der R einen Kohlenwasserstoffrest mit 1 bis 20 Kohlenstoffatomen bedeutet, oder an ein sulfuriertes Olefin gebunden ist.

**13.** Verfahren nach einem der Ansprüche 1 bis 12, in dem der Katalysator ein Katalysator auf Grundlage mindestens eines Metalls der Gruppen VIB und VIII des Periodensystems der Elemente, vorzugsweise Molybdän, Wolfram, Nickel und/oder Kobalt, ist.

**14.** Verfahren nach Anspruch 13, in dem der Katalysator eine Co-Mo-, Ni-Mo- oder Ni-W-Verbindung ist, die auf einem porösen mineralischen Träger abgeschieden ist.

**15.** Verfahren nach Anspruch 14, in dem der Katalysator ein Co-Mo/Aluminiumoxid-Katalysator ist.

**16.** Verwendung eines vorsulfurierten Katalysators nach einem der Ansprüche 1 bis 15 zur Hydrogenierung von kohlenwasserstoffhaltigen Füllstoffen.